Europäisches Patentamt

European Patent Office

Office européen des brevets

(11) Publication number: **0 046 410**
**B1**

(12) **EUROPEAN PATENT SPECIFICATION**

(45) Date of publication of patent specification: **31.10.84**

(51) Int. Cl.³: **G 11 B 5/47**

(21) Application number: **81303771.0**

(22) Date of filing: **19.08.81**

(54) Bias control method and apparatus for magnetic recording.

(30) Priority: **20.08.80 DK 3572/80**

(43) Date of publication of application:
**24.02.82 Bulletin 82/08**

(45) Publication of the grant of the patent:
**31.10.84 Bulletin 84/44**

(84) Designated Contracting States:
**AT BE DE FR GB IT NL**

(56) References cited:
**DE-A-2 855 259**
**GB-A-2 018 006**
**GB-A-2 019 075**
**GB-A-2 019 633**
**US-A-3 798 673**
**US-A-4 253 122**

(73) Proprietor: **BANG & OLUFSEN A/S**
**DK-7600 Struer (DK)**

(72) Inventor: **Jensen, Jorgen Selmer**
**Bjerregaardsparken 58**
**DK-7560 Hjerm (DK)**

(74) Representative: **Pears, David Ashley et al**
**REDDIE & GROSE 16 Theobalds Road**
**London WC1X 8PL (GB)**

Courier Press, Leamington Spa, England.

## Description

The present invention relates to apparatus for recording an input signal on a magnetic medium comprising a recording head for recording on the magnetic medium, a variable amplitude AC bias signal generator, and means for applying the input signal and bias signal to the recording head. The invention also relates to a method of recording input signals on a magnetic medium comprising the steps of applying the input signal and a varying amplitude AC bias signal to a recording head for recording on the magnetic medium.

When tape or rather wire recording was originally invented, no bias was used in the recording head, i.e. only the magnetic signals as produced by the electric sound signals were transferred to the magnetic medium as it moved past the recording head. Later on it was discovered that the quality of the recording was improved when a constant DC bias was applied to the recording head, because the AC sound signal could then cause the medium to be magnetized without distortion due to the hysteresis phenomena. Still later it was discovered that a constant AC bias of a relatively high frequency was much better, because it did away with a noise problem caused by the DC bias and showed additional advantages especially with respect to the intensity of the recorded signal. Thus, with the use of an AC bias it is possible to create effective magnetic impressions of sound signals on modern tapes having a very thin layer of magnetic medium and being moved relatively slowly past the recorder head.

It has been found, however, that there are some problems connected with the adjustment of the intensity of the AC bias to an optimum, because it seems to be true that in the low end of the sound frequency spectrum the optimal bias intensity is higher than what is optimal for the frequencies of the high end of the spectrum. It is normal practice, therefore, to select a bias intensity which is optimal to a broad middle range of the sound frequency spectrum, while non-optimal to both the low and the high frequencies, whereby the magnetizing capacity of the tape is not fully utilized for these frequencies.

Sporadic attempts have been made to solve this problem, yet so far without real success. The attempts have concentrated on a dynamic or variable bias solution, whereby sensor means are used for steadily sensing the proportion of high or low frequencies in the sound signal and for controlling the intensity of the applied bias accordingly, i.e. such that the bias intensity is reduced whenever the sound signal has a relatively large proportion of high frequencies and/or increased when it is the low frequency proportion which is prevailing. (DE—AI— 2 855 259 and US—A—3 798 673). In fact the known solutions of this type seem to be advantageous as far as the discussed problem is concerned, even though, they are of course still bound to be compromise solutions, because almost all sound signals include frequencies from both the high and the low end of the audible frequency range. However, while these known systems with their variable bias intensity may be advantageous with respect to the discussed problem they give rise, unfortunately, to some other rather serious problems.

Thus, as known to those skilled in the art, any change of the bias intensity will affect various tape characteristics such as the sensitivity and the magnetizing capacity of the magnetic medium generally for all sound frequencies, and though a dynamically varying bias may well optimize the recording of the low or high sound frequencies, respectively, it will nevertheless be liable to disturb the correct uniform recording of the entire remaining major sound frequency range. Especially for this reason the said known variable bias intensity systems have not brought about any real solution to the problem of providing for a generally optimized bias.

The present invention is concerned with a further development of variable bias production, and its object is to provide a method and apparatus which will produce a bias maintaining an optimized intensity, thus leaving the tape characteristics substantially constant, while nevertheless enabling the biasing to be optimized whenever the sound signal has a predominating proportion of high or low frequencies, respectively.

Based on the prior art, such a contribution should seem impossible, but the invention is based on the recognition that the said high sound frequencies as occurring in the sound signals show an inherent effective bias action for the recording of the low frequencies and that this action is so pronounced and well defined that the primary or applied bias from the bias generator may simply be reduced to a corresponding degree.

The apparatus according to the invention is characterised by control means responsive to a control signal representing the amplitude of the total active biasing magnetic field at the magnetic medium to control the bias signal generator so as to maintain an optimized total active biasing magnetic field at the magnetic medium.

The method according to the invention is characterised by controlling the AC bias signal amplitude in response to a control signal representing the amplitude of the total active biasing magnetic field at the magnetic medium so as to maintain an optimized total active biasing magnetic field at the magnetic medium.

The control signal is most easily derived from the signal applied to the recording head, using a frequency selective circuit to pass the total active bias signal.

The invention thus makes it possible for the active bias to be maintained substantially optimized because the applied bias is positively controlled and varied in such a specific manner that the sum of the applied bias and the inherent bias of the high sound frequencies is dynamically maintained substantially optimized at a predetermined desired intensity.

With the achieved constancy of the active bias the said general tape characteristics will be maintained substantially constant irrespectively of the optimizing variations of the applied bias. When the applied bias is controlled based on a measurement of the combined inherent and applied bias the latter is very easily controllable because it is sufficient to compare the combined measuring result with a constant such as a predetermined reference voltage and cause the applied bias to be automatically adjusted through feed back operation such that the combined measuring result steadily corresponds to the said constant. With this technique it will then be easy to enable the tape recorder to be adaptable to various types of tapes having different general tape characteristics, because it will normally be sufficient to adjust the said reference constant or voltage to the particular type of the tape, this adjustment being effected manually or by any suitable automatic detection of the type of the tape as being actually used in the tape recorder.

Advantageous developments of the invention are defined in dependent claims.

In the following the invention will be explained in more detail with reference to the accompanying drawing, in which:

Fig. 1 is a schematic diagram of a bias control system according to the invention, while

Fig. 2 is a more detailed diagram thereof.

Fig. 3 is a plot of the transfer function of the filtered used in embodiment of Figs. 1 and 2.

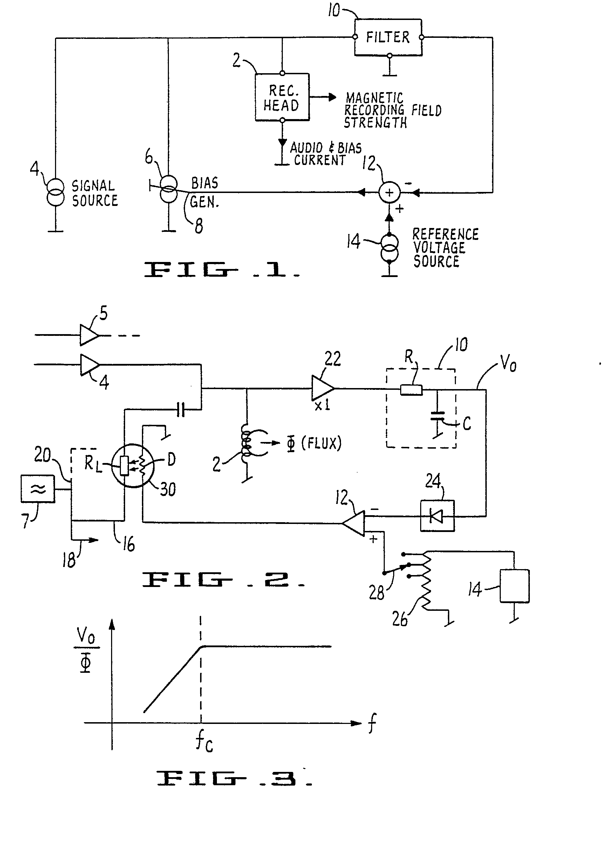

In Fig. 1 the reference numeral 2 designates a record head or a combined playing and recording head of a tape recorder. An input signal, such as an audio signal is supplied to the record head 2 from a signal source 4, and parallel therewith an AC bias signal of e.g. 100 kHz is supplied to the record head from a bias generator 6 of a type operable to produce an output bias signal of variable voltage as controlled by a control signal applied to a control signal input terminal 8.

The combined audio signal and bias signal as supplied to the recording head 2 is also supplied to a frequency selective circuit 10 which is a high pass filter for frequencies in the high end of the spectrum recordable by the apparatus and thereabove. Thus, the output signal of the filter 10 will correspond to the sum of the bias voltage from the generator 6 and the high frequency contents of the audio signal from the signal source 4 and this output signal is fed to a comparator 12, in which the signal is subtracted from a constant reference signal as produced by a reference signal generator 14. The output signal of the comparator 12 is applied to the bias generator 6 as a control signal fed to the control input terminal 8.

When the audio signal shows a high proportion of relatively high sound frequencies the comparator 12 will produce a low output signal, because the filter 10 will show a high output to be subtracted from the constant reference signal. The bias generator 6 is so adapted that its bias output is adjusted in response to the control signal input on the terminal 8, i.e. in the discussed situation the bias output or applied bias will be relatively weak, corresponding to an optimal bias because of the inherent bias effect of the high sound frequencies.

If or when the audio signal changes so as to show a reduced content of high frequencies, then the output of the filter 10 will decrease, and consequently the control output of the comparator 12 will increase, i.e. in this situation the bias generator 6 will produce a bias signal of increased voltage, which is desirable because the inherent bias effect of the high sound frequencies is correspondingly reduced.

The system is easily adjustable so as to ensure that the magnitude of the substantially constant active bias will correspond to the optimal bias level for the tape as used, because this will mainly be a question of selecting a suitable reference voltage of the generator 14. Selector means may be provided for enabling the reference voltage to be appropriately changed if a different type of tape is to be recorded.

The transfer function of the filter 10 may be unchanged for different types of recording tape. The filter should rather be adapted to the recording characteristic of the recorder itself, such that the upper limit of the sound frequency range as recordable by the particular type of recorder should correspond approximately to the cut off frequency of the filter. This will require that a full high frequency audio signal to be recorded produces a maximum output from the comparator 12 corresponding to a minimum of applied bias. The applied bias will then increase as the high frequency contents of the audio signal decreases but it will not be able to increase beyond the value corresponding to zero output from the filter 10.

The transfer function of the filter 10 in the effective or recordable frequency range may well be as simple as possible, viz. rising at 6 dB/octave up to the cut off frequency.

In Fig. 2 is shown a more detailed example, in which the record head is again designated 2, now representing one half of a double stereo recorder head. The audio signal source 4 is one of the two amplifiers of a standard stereo tape recorder, the other being indicated at 5. The bias generator is designated 7; it is constituted by a conventional combined bias and erase oscillator producing an AC current e.g. at 100 kHz both to the recorder head 2, as a bias through a wire 16, and through a wire 18 to an erase head (not shown) operating to erase the tape track prior to its passage by the recorder head. Moreover, the oscillator 7 also supplies a corresponding AC current, through a wire 20, to the corresponding recorder head portions pertaining to the other channel or track of the stereo tape. The full circuit of the bias control means is illustrated for one of these channels only, but a similar circuit exists for the other channel as well.

The filter 10 is a simple passive network including a resistor R and a capacitor C. It is assumed that the upper limit of the effective frequency range of the recorder is some 18 kHz, and the RC high pass filter 10 is then designed to show the same 18 kHz as its cut off frequency. In front of the filter is placed a buffer amplifier 22 ensuring that the record head 2 receives the full intensity of the combined audio and bias signal despite the presence of the filter 10.

The comparator 12 is a differential amplifier receiving on its minus input terminal the output signal of the filter 10 as rectified through a rectifier 24 and receiving on its plus input terminal a DC voltage derived from a voltage divider 26 through a selector 28, the voltage diver 26 being connected to a constant voltage source 14. The selector 28 is set to meet the general bias requirements of a particular type of tape to be recorded.

The said applied bias as produced by the oscillator 7 is fed to the recorder head 2 through a so-called photo coupler 30 controlled by the output of the differential amplifier 12, i.e. through a light sensitive resistor $R_L$ exposed to the variable light intensity from a lamp or light emitting diode D operated by the amplifier 12 in inverted relationship with the intensity of the output from the filter 10.

It will be appreciated that the system shown in Fig. 2 operates exactly according to the description of Fig. 1 in that the filter 10 receives input information of the sum of the applied bias signal and the high frequency proportion of the audio signal and causes the applied bias to be dynamically adjusted in accordance with the relative lack of bias producing high sound frequencies in the sound signal, such that the total or active bias is dynamically maintained substantially constant in a very simple manner by means of a feedback control loop system.

The transfer function of the filter 10 is illustrated in Fig. 3. Both axes are logarithmic.

The function is constant for frequencies beyond the cut off frequency $f_c$, which should preferably correspond to the upper limit of the operative frequency range of the recorder, normally somewhere between 10 and 20 kHz. For frequencies decreasing from the characteristic frequency the transfer function falls off at 6 dB/octave.

The invention is not in any way limited to the embodiments shown and described. Especially in connection with professional recording equipment the invention will comprise the method of maintaining the said active bias substantially constant irrespectively of the detailed design of the control circuitry, and the invention is not either limited to conventional sound recording, because the main problems in question relate to the interaction between the recorder head and the tape and more precisely to the recording frequency versus the speed of the tape. Thus, the same problems are encountered when the recording frequencies are much higher than ordinary sound frequencies and the tape speed relative the recorder head is correspondingly much higher than in ordinary sound recorders, e.g. in video recorders, and the principles of the present invention will equally apply to the recording of other kinds of signals, whenever the relative speed between the recorder head and the tape compared with the frequencies to be recorded corresponds to the operation conditions of a conventional sound recorder.

**Claims**

1. Apparatus for recording an input signal on a magnetic medium comprising a recording head (2) for recording on the magnetic medium, a variable amplitude AC bias signal generator (6), and means for applying the input signal and bias signal to the recording head, characterised by control means (10, 8) responsive to a control signal representing the amplitude of the total active biasing magnetic field at the magnetic medium to control the bias signal generator (6) so as to maintain an optimized total active biasing magnetic field at the magnetic medium.

2. Apparatus according to claim 1, characterised in that the control signal is a feed back signal derived from the total active bias signal applied to the recording head (2).

3. Apparatus according to claim 2, characterised in that the control means comprises a frequency selective circuit (10) responsive to the signal applied to the recording head to pass the total active bias signal, a reference signal generator (14) and a comparator (12) for comparing the reference signal amplitude and the total active bias signal amplitude to generate a control signal for controlling the bias generator (6).

4. Apparatus according to claim 3, characterised in that the frequency selective circuit is a filter circuit (10) having a cut off frequency at a frequency corresponding approximately to the upper frequency limit recordable by the apparatus.

5. Apparatus according to claim 4, characterised in that the filter circuit (10) is a high pass filter having a 6 dB/octave characteristic rising up to the cut off frequency.

6. Apparatus according to claim 3, 4 or 5, characterised by means (26, 28) for adjusting the reference signal amplitude according to the type of tape used in the recorder, whereby the amplitude of the substantially constant total active bias signal at the recording head is selectable.

7. A method of recording input signals on a magnetic medium comprising the steps of applying the input signal and a varying amplitude AC bias signal to a recording head for recording on the magnetic medium, characterised by controlling the AC bias signal amplitude in response to a control signal representing the amplitude of the total active biasing magnetic field at the magnetic medium so as to maintain an optimized total active biasing magnetic field at the magnetic medium.

8. A method according to claim 7, characterised in that the total active bias signal at the recording head is sensed to provide the control signal.

## Revendications

1. Appareil d'enregistrement d'un signal d'entrée sur un support magnétique comprenant une tête d'enregistrement (2) destinée à l'enregistrement sur le support magnétique, un générateur de signal de polarisation alternatif d'amplitude variable (6), et des moyens pour appliquer le signal d'entrée et le signal de polarisation à la tête d'enregistrement, caractérisé par des moyens de commande (10, 8) qui réagissent à un signal de commande représentant l'amplitude du champ magnétique de prémagnétisation active totale au niveau du support d'enregistrement, pour commander le générateur de signal de polarisation (6) afin de maintenir un champ magnétique de prémagnétisation active totale optimisé au niveau du support d'enregistrement.

2. Appareil selon la revendication 1, caractérisé en ce que le signal de commande est un signal de réaction qui est obtenu à partir du signal de polarisation active totale appliqué à la tête d'enregistrement (2).

3. Appareil selon la revendication 2, caractérisé en ce que les moyens de commande comprennent un circuit à sélectivité de fréquence (10) qui réagit au signal appliqué à la tête d'enregistrement de façon à transmettre le signal de polarisation active totale, un générateur de signal de référence (14) et un comparateur (12) destiné à comparer l'amplitude du signal de référence et l'amplitude du signal de polarisation active totale, pour produire un signal de commande destiné à commander le générateur de polarisation (6).

4. Appareil selon la revendication 3, caractérisé en ce que le circuit à sélectivité de fréquence est un circuit de filtre (10) ayant une fréquence de coupure à une fréquence qui correspond approximativement à la limite de fréquence supérieure enregistrable par l'appareil.

5. Dispositif selon la revendication 4, caractérisé en ce que le circuit de filtre (10) est un filtre passehaut ayant une caractéristique de 6 dB/octave s'élevant jusqu'à la fréquence de coupure.

6. Dispositif selon la revendication 3, 4 ou 5, caractérisé par des moyens (26, 28) destinés à régler l'amplitude du signal de référence conformément au type de bande utilisé dans l'enregistreur, grâce à quoi l'amplitude du signal de polarisation active totale pratiquement constant au niveau de la tête d'enregistrement peut être sélectionnée.

7. Un procédé d'enregistrement de signaux d'entrée sur un support magnétique, comprenant les opérations qui consistent à appliquer le signal d'entrée et un signal de polarisation alternatif d'amplitude variable à une tête d'enregistrement, pour l'enregistrement sur le support magnétique, caractérisé en ce qu'on commande l'amplitude du signal de polarisation alternatif sous la dépendance d'un signal de commande qui représente l'amplitude du champ magnétique de prémagnétisation active totale au niveau du support magnétique, afin de maintenir un champ magnétique de prémagnétisation active totale optimisé au niveau du support magnétique.

8. Un procédé selon la revendication 7, caractérisé en ce qu'on détecte le signal de polarisation active totale au niveau de la tête d'enregistrement pour produire le signal de commande.

## Patentansprüche

1. Gerät für die Aufzeichnung eines Eingangssignals auf einem Magnetträger mit einem Magnetkopf (2) für die Aufzeichnung auf dem Magnetträger, mit einem Wechselvorspannungssignalgenerator mit veränderlicher Amplitude (6) und mit einer Einrichtung, um das Eingangssignal und das Vorspannungssignal an den Aufzeichnungskopf zu legen, gekennzeichnet durch eine Steuereinrichtung (10, 8), die auf ein Steuersignal anspricht, das die Amplitude des aktiven Gesamtvorspannungsmagnetfelds am Magnetträger kennzeichnet, um den Vorspannungssignalgenerator (6) so zu regeln, daß ein optimiertes aktives Gesamtvorspannungsmagnetfeld am Magnetträger aufrecht gehalten wird.

2. Gerät gemäß Anspruch 1, dadurch gekennzeichnet, daß das Steuersignal ein Rückkopplungssignal ist, das vom aktiven Gesamtvorspannungssignal hergeleitet wird, das am Aufzeichnungskopf (2) liegt.

3. Gerät gemäß Anspruch 2, dadurch gekennzeichnet, daß die Steuereinrichtung eine Frequenzauswahlstufe (10), die auf das am Aufzeichnungskopf liegende Signal anspricht, um das aktive Gesamtvorspannungssignal durchzulassen, einen Bezugssignalgenerator (14) sowie einen Vergleicher (12) enthält, um die Bezugssignalamplitude und die Amplitude des aktiven Gesamtvorspannungssignals zu vergleichen, um ein Steuersignal für die Steuerung des Vorspannungsgenerators (6) zu erzeugen.

4. Gerät gemäß Anspruch 3, dadurch gekennzeichnet, daß die Frequenzauswahlstufe eine Filterstufe (10) ist, deren Grenzfrequenz bei einer Frequenz liegt, die etwa der oberen Frequenzgrenze entspricht, die mit dem Gerät aufgezeichnet werden kann.

5. Gerät gemäß Anspruch 4, dadurch gekennzeichnet, daß die Filterstufe (10) ein Hochpaßfilter ist, das eine 6 dB/Oktav-Kennlinie besitzt, die zur Grenzfrequenz ansteigt.

6. Gerät gemäß Anspruch 3, 4 oder 5, gekennzeichnet durch eine Einrichtung (26, 28), um die Bezugssignalamplitude gemäß der im Bandgerät verwendeten Bandart einzustellen, wodurch die Amplitude des im wesentlichen konstanten aktiven Gesamtvorspannungssignals am Aufzeichnungskopf ausgewählt werden kann.

7. Verfahren zur Aufzeichnung von Eingangssignalen auf einem Magnetträger, wobei das Verfahren die Schritte des Anlegens des Eingangssignals und eines Wechselvorspannungssignals mit veränderlicher Amplitude an einen Aufzeichnungskopf enthält, um die Aufzeichnung auf dem Magnetträger durchzuführen, dadurch gekennzeichnet, daß die Amplitude des Wechselvorspannungssignals in Abhängigkeit von einem Steruersignal geregelt wird, das die Amplitude des aktiven Gesamtvorspannungsmagnetfelds am Magnetträger kennzeichnet, um ein optimiertes aktives Gesamtvorspannungsmagnetfeld am Magnetträger aufrecht zu halten.

8. Verfahren gemäß Anspruch 7, dadurch gekennzeichnet, daß das aktive Gesamtvorspannungssignal am Aufzeichnungskopf abgetastet wird, um das Steuersignal zu liefern.

FIG.1.

FIG.2.

FIG.3.